# EUROPEAN PATENT APPLICATION

(11) **EP 4 804 372 A1**
(43) Date of publication of application: **09.09.2026**
(21) Application number: 25162373.2
(22) Date of filing: 07.03.2025
(51) Int. Cl.: H02J 4/00, H02M 1/10

(54) **APPARATUS HAVING LOAD AND METHOD OF OPERATING SUCH APPARATUS**

(71) Applicant: Husqvarna AB, 561 82 Huskvarna (SE)
(72) Inventor: Merkle, Martin, 89168 Niederstotzingen (DE)
(74) Representative: Finkele, Rolf

(57) **Abstract**

An apparatus **(100)** having a load **(102)** is provided. The apparatus **(100)** comprises an AC power supply **(104)** having a first high side **(108)** and a first low side **(110),** and a DC power supply **(106)** having a second high side **(112)** and a second low side **(114)**. A common ground **(116)** connects the first low side **(110)** and the second low side **(114)**. The apparatus **(100)** is characterized in that a first switch **(118)** is connected to the first high side **(108)** to the load **(102)** and operates the apparatus **(100)** in a high voltage operation mode in which the AC power supply **(104)** is provided to the load **(102)**. A second switch **(120)** is connected to the second high side **(112)** to the load **(102)** and operates the apparatus **(100)** in a low voltage operation mode in which the DC power supply **(106)** is provided to the load **(102)**.

## Description

### TECHNICAL FIELD

The present disclosure relates to an apparatus. More particularly, the present disclosure relates to the apparatus having a load and a method of operating the apparatus.

### BACKGROUND

The apparatuses, in particular, electrical apparatuses are commonly used in domestic and industrial applications, such as gardening. The electrical apparatuses generally are generally divided into two categories: AC (corded) power apparatuses and DC (cordless) power apparatuses. The AC power apparatuses are used for heavy-duty tasks requiring higher power and longer runtimes. However, they are required to be connected to an AC power supply, which may not be always practical. The DC power apparatuses are used for lighter tasks, with lower power needs and shorter runtimes. They are more portable but limited in power and runtime, and their heavier batteries may pose ergonomic challenges. Both types of power apparatuses may use various electric motors, such as brushed or brushless, with different motor control circuits. The AC power apparatuses generally run on higher voltage (e.g., 120V or 230V) and are controlled by either an on-off switch or a variable speed circuit. The DC power apparatuses, with lower battery voltages (e.g., 12V, 20V, 40V), use control circuits like analog voltage regulators or digital pulse-width modulation for power management.

An example of electric apparatus is provided by United States patent US 10,333,453 B2 (hereinafter referred to as '453 reference). The '453 reference discloses a power tool that includes an electric universal motor designed to function within an operating voltage range of approximately 90V to 132V. The tool features a power supply interface that accept either Alternating Current (AC) power from an AC source with a first nominal voltage, or Direct Current (DC) power from a DC source with a second nominal voltage, where both the first and second nominal voltages are within the motor's operating range. The interface is configured to route the AC power through an AC power line and the DC power through a DC power line. A motor control circuit delivers power to the motor from either the AC or DC power line through a common node, ensuring that the motor brushes are electrically connected to the AC or DC power supply.

### SUMMARY OF THE INVENTION

In view of the above, it is an objective of the present invention to solve or at least reduce the drawbacks discussed above. The objective is at least partially achieved by an apparatus having a load and a method of operating the apparatus.

According to an aspect of the present invention, the apparatus having the load is provided. The apparatus comprises an AC power supply having a first high side and a first low side. The apparatus also comprises a DC power supply having a second high side and a second low side. The apparatus further comprises a common ground connecting the first low side and the second low side. The apparatus is characterized in that a first switch is configured to connect the first high side of the AC power supply to the load, and a second switch is configured to connect the second high side of the DC power supply to the load. The first switch is configured to operate the apparatus in a high voltage operation mode in which the AC power supply is provided to the load. The second switch is configured to operate the apparatus in a low voltage operation mode in which the DC power supply is provided to the load.

The present disclosure provides an apparatus that allows selection of a power source for operating a load. Specifically, a user may select operation of the apparatus using a suitable power supply. For instance, the user may select the AC power supply when the apparatus is in proximity to an AC power supply outlet or the user may select the DC power supply when the apparatus is away from the AC power supply outlet, for example, in a garden / a park. In addition, the user may select the AC power supply when the load requires higher power, and may select the DC power supply when a lower, more efficient voltage is sufficient. In other words, the apparatus advantageously allows selection between the AC power source and the DC power source based on the discretion of the user and/or the requirements of the load. The ability to select between different modes may ensure that the apparatus may operate in the most efficient mode at any given time. Further, this apparatus allows direct connection of the AC power supply and the DC power supply with the load, thereby eliminating or substantially minimizing the need for extra conversion stages, leading to a simpler design and reduced component count. Further, by using the DC power supply when appropriate, the apparatus may take advantage of potentially lower operational costs, especially in regions or situations where the AC power supply may be expensive or less efficient.

According to an exemplary embodiment of the invention, the first switch and/or the second switch are one or more Field-Effect Transistor (FET) switches. The FET switches may be suitable for operating the apparatuses that require flexibility in power supplies (AC power supply for high-voltage operations and DC power supply for low-voltage operation), thereby improving the overall performance and energy efficiency of the apparatus.

According to an exemplary embodiment of the invention, the apparatus may comprise a full wave rectifier, specifically a bridge rectifier. The bridge rectifier may be able to generate a pulsed DC signal corresponding to an AC input signal for operating the load.

According to an exemplary embodiment of the invention, both the switches share the same drive signal. In an exemplary embodiment, the apparatus may comprise a controller to generate a single control signal to manage both the AC power supply and the DC power supply. This may simplify the control circuitry, thereby reducing the complexity and potential for errors in the design. Further, this may reduce the need for additional circuitry or logic to coordinate the switching of two separate signals, streamlining the overall architecture. Further, sharing the single drive signal may eliminate the need for duplicate control circuitry or multiple drivers for each switch. This may result in fewer components, lowering cost, reducing board space requirements, and making the overall design more compact and cost-effective.

According to an exemplary embodiment of the invention, the first switch is a Pulse Width Modulation (PWM) switch. The PWM switch may advantageously provide efficient power control, improved energy savings, compact design, and better load adaptation.

According to an exemplary embodiment of the invention, the controller is configured to control a PWM duty cycle of the first switch. The PWM switch may be easily controlled by digital controllers, such as microcontrollers or digital signal processors (DSPs), thereby allowing for precise, flexible control of the AC power supply.

According to an exemplary embodiment of the invention, the DC power supply is a battery. The use of the battery as the DC power supply may advantageously ensure continuous power availability, provide efficient energy use, and allow autonomous operation in the absence of the AC power supply.

According to an exemplary embodiment of the invention, the AC power supply has a normal output voltage of 325 volts. The AC power supply of 325 volts is typically high enough to efficiently power industrial and commercial apparatuses that may require a significant amount of energy. This higher voltage may allow to drive high-power loads effectively, such as electric motors.

According to an exemplary embodiment of the invention, the battery has a normal output voltage of 20 volts. The 20-volt battery may be particularly suited for low-voltage applications, ensuring that loads requiring lower power may be efficiently operated. Further, a lower output voltage such as 20V may reduce the overall drain on the battery, thereby allowing for long battery life.

According to an exemplary embodiment of the invention, the apparatus is one of the group comprising an electric pump, an electric cutting tool, and an electric mower. The apparatus however may be any electrical apparatus such as an industrial equipment, consumer electronic, electric vehicle, or any other electrically actuated apparatus, that may operate using both the power supplies, i.e., the AC power supply, and the DC power supply.

According to an exemplary embodiment of the invention, the load is an electric motor. The user may select the AC power supply using the first switch or the DC power supply using the second switch based on a requirement / a type of the electric motor.

According to a further aspect of the present invention, the method of operating an apparatus having a load is provided. The method comprises providing an AC power supply having a first high side and a first low side. The method also comprises providing a DC power supply having a second high side and a second low side. The method further comprises connecting the first low side and the second low side to a common ground. The method is characterized in that, the method comprises connecting the first high side to the load via a first switch and operating the apparatus in a high voltage operation mode in which the AC power supply is provided to the load. The method also comprises connecting the second high side to the load via a second switch, and operating the apparatus in a low voltage operation mode in which the DC power supply is provided to the load.

The present disclosure provides an improved method that facilitates a user to select the AC power supply or the DC power supply based on the user's discretion or availability of a type (AC or DC) power source. In other words, the method advantageously allows switching between the AC power source and the DC power source based on the requirements of the user. The ability to switch between different modes may ensure that the apparatus may operate in the most efficient mode at any given time. Further, this method allows direct connection of the AC power supply and the DC power supply with the load, thereby eliminating or substantially minimizing the need for extra conversion stages, leading to a simpler design and reduced component count. Further, by using the DC power supply when appropriate, the method may allow the apparatus to take advantage of potentially lower operational costs, especially in regions or situations where the AC power supply may be expensive or less efficient. Further, the method may provide the versatility to operate a variety of loads that may have different voltage and power requirements.

According to an exemplary embodiment of the invention, the first switch and/or the second switch are one or more Field Effect Transistor (FET) switches. The FET switches may preferably be used as the first switch and/or the second switch in the method of operating the apparatus due to its high efficiency, fast switching speed, low power loss, and simplicity in the design of the control circuitry.

According to an exemplary embodiment of the invention, both the switches share the same drive signal. Sharing the same control signal may imply both switches being operated in unison, avoiding any potential timing issues or discrepancies between the AC power supply and the DC power supply. It has to be avoided that inadvertently both the AC power supply and the DC power supply are applied to the load simultaneously as this may otherwise lead to electrical faults or damage. Instead of arranging for a complex electric circuitry that avoids the simultaneous application of AC and DC power it is advantageous if the simultaneously application of power is disabled using a mechanical barrier. This for example can be achieved if a battery that is inserted to supply DC power will mechanically cover the socket allowing to plug in an AC power supply.

According to an exemplary embodiment of the invention, the apparatus is one of the group comprising an electric pump, an electric cutting tool, and an electric mower. The apparatus however may be any electrical apparatus such as an industrial equipment, consumer electronic, electric vehicle, or any other electrically actuated apparatus, that may operate on both the power supplies, i.e., the AC power supply, and the DC power supply.

According to an exemplary embodiment of the invention, the DC power supply is a battery. The use of the battery as the DC power supply may advantageously ensure continuous power availability, provide efficient energy use, and allow autonomous operation in the absence of the AC power supply.

Before discussing the invention with the help of the drawings the invention will be briefly discussed in general. An apparatus having a load and a method of operating the apparatus is provided, where two distinct input voltages are routed through separate paths, each with its own switch. This is achieved by using a high side switch instead of the typical low side switch. The advantage of this approach is that a low voltage switch only needs to handle low voltage, making it easier to optimize for high current-carrying capacity, which is essential in low-voltage operation. In contrast, a high voltage switch requires lower current capacity and may tolerate higher on-state losses, as it is only activated briefly due to the low duty cycle in high voltage mode. The high side switching also allows both input voltages (high and low) to share the same ground potential. This setup enables straightforward low side measurement of the load current, independent of the supply input. This approach also applies to other logical components of the circuit, including human-machine interfaces like buttons and LEDs.

The apparatus and the method according to the present invention may provide the low voltage switch, which may be used for battery operation. The apparatus and the method according to the present invention may provide the switch with low current-carrying capacity for AC (high-voltage) operation. The apparatus and the method according to the present invention may provide low side current measurement independent of the supply input. The apparatus and the method according to the present invention may provide the common ground potential of the entire circuit.

According to an exemplary embodiment of the invention, the apparatus and the method may provide the individual switches for the different voltage inputs. According to an exemplary embodiment of the invention, the apparatus and the method may provide high side switching of the load. According to an exemplary embodiment of the invention, the apparatus and the method may provide common reference potential despite separate voltage inputs. According to an exemplary embodiment of the invention, the apparatus and the method may allow both switches to share the same drive signal. According to an exemplary embodiment of the invention, the apparatus and the method may provide PWM to compensate higher input voltage.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** illustrates a block diagram of an apparatus according to an exemplary embodiment of the present invention;
**FIG. 2** illustrates a circuit diagram of an apparatus according to an exemplary embodiment of the present invention; and
**FIG. 3** illustrates a flowchart for a method of operating an apparatus according to an exemplary embodiment of the present invention.

### DETAILED DESCRIPTION OF THE DRAWINGS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention may be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left", "right", "horizontal", "vertical", "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

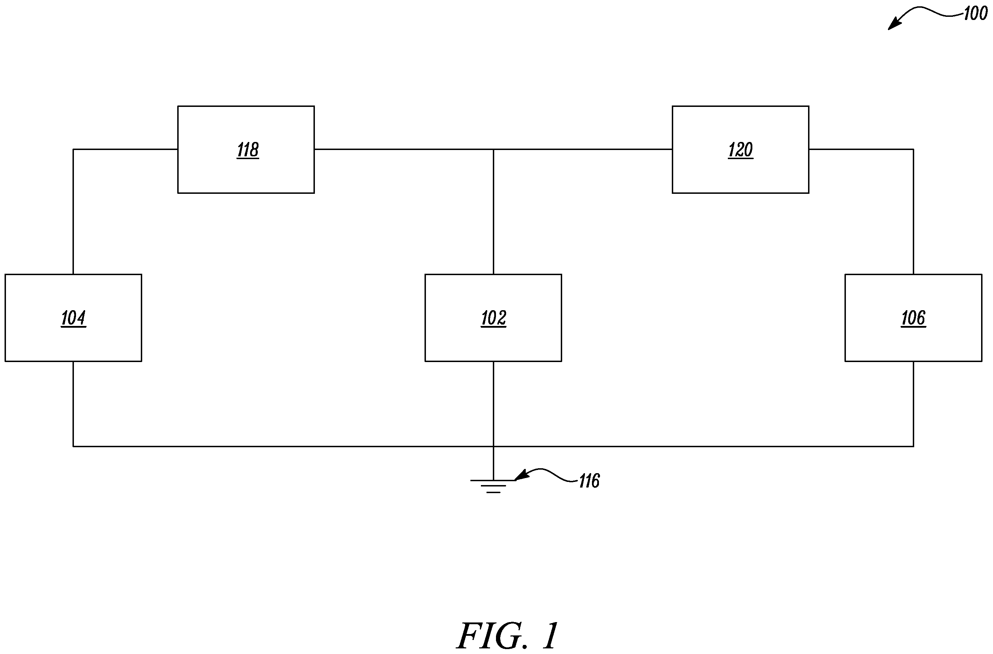

**FIG. 1** illustrates a block diagram of an apparatus **100.** The apparatus **100** is one of the group comprising an electric pump, an electric cutting tool, and an electric mower. The apparatus **100** includes a load **102** such that the load **102** is an electric motor **102.** In other words, the apparatus **100** is operable by actuation of the load **102,** in particular, the electric motor **102.** The apparatus **100** includes an AC power supply **104,** a DC power supply **106,** and a common ground **116.** The common ground **116** is configured to provide a ground connection for the AC power supply **104** and the DC power supply **106.**

Further, the apparatus **100** includes a first switch **118** and a second switch **120.** The first switch **118** is configured to operate the apparatus **100** in a high voltage operation mode in which the AC power supply **104** is provided to the load **102.** The second switch **120** is configured to operate the apparatus **100** in a low voltage operation mode in which the DC power supply **106** is provided to the load **102.** Preferably, both the switches, i.e., the first switch **118** and the second switch **120** share the same drive signal from a controller (not shown) of the apparatus **100.**

According to an exemplary embodiment of the invention, the first switch **118** and/or the second switch **120** are one or more Field Effect Transistor (FET) switches. According to another exemplary embodiment of the invention, the first switch **118** is a Pulse Width Modulated (PWM) switch such that the controller of the apparatus **100** is configured to control a PWM duty cycle of the first switch **118.**

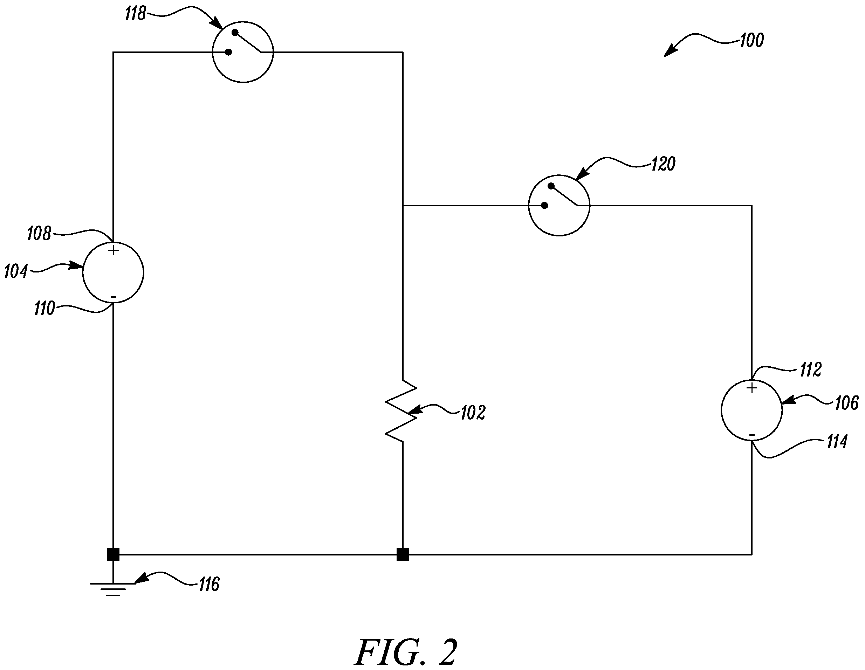

**FIG. 2** illustrates a circuit diagram of the apparatus **100.** The apparatus **100** includes the AC power supply **104,** which has a normal output voltage of **325** volts. The AC power supply **104** includes a first high side **108** and a first low side **110.** The first high side **108** is a positive or live terminal of the AC power supply **104.** The first low side **110** is a neutral or ground terminal of the AC power supply **104.** The apparatus **100** further includes the DC power supply **106,** which is a battery **106.** The battery has a normal output voltage of **20** volts. The DC power supply **106** includes a second high side **112** and a second low side **114.** The second high side **112** is a positive terminal of the DC power supply **106.** The second low side **114** is a negative or ground terminal of the DC power supply **106.** The common ground **116** connects the first low side **110** of the AC power supply **104** and the second low side **114** of the DC power supply **106.**

Further, the load **102** consumes power from the AC power supply **104** or the DC power supply **106.** The load **102** is connected to both the AC power supply **104** and the DC power supply **106** through the first switch **118** and the second switch **120** respectively. In other words, the first switch **118** and the second switch **120** are respectively configured to control which power source is delivering energy to the load **102** at any given time.

The first switch **118** is configured to connect the first high side **108** of the AC power supply **104** to the load **102.** In other words, when the first switch **118** is closed (turned on), the AC power flows from the first high side **108** of the AC power supply **104** to the load **102.** Further, the second switch **120** is configured to connect the second high side **112** of the DC power supply **106** to the load **102.** In other words, when the second switch **120** is closed, the DC power flows from the second high side **112** of the DC power supply **106** to the load **102.**

During operation of the circuit, when the first switch **118** is closed, the AC power is routed from the AC power supply **104** to the load **102.** The first high side **108** is connected to the load **102,** and the first low side **110** returns current flows through the common ground **116.** Further, when the second switch **120** is closed, the DC power is routed from the DC power supply **106** to the load **102.** The second high side **112** is connected to the load **102,** and the return current flows through the second low side **114** to the common ground **116.** The load **102** receives power from either the AC power supply **104** or the DC power supply **106,** depending on which of the two switches **118, 120** is closed.

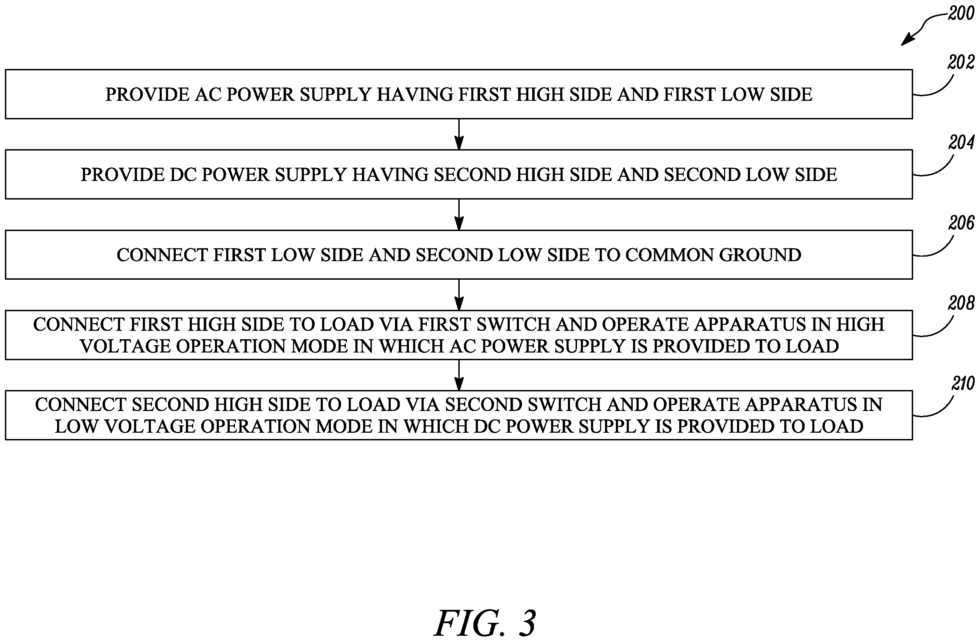

**FIG. 3** illustrates a flowchart for a method **200** of operating an apparatus **100** with a load **102.** The apparatus **100** is one of the group comprising an electric pump, an electric cutting tool, and an electric mower. The method **200** includes a step **202** of providing an AC power supply **104** having a first high side **108** and a first low side **110.** The method **200** also includes a step **204** of providing a DC power supply **106** having a second high side **112** and a second low side **114.** The DC power supply **106** is a battery. The method **200** further includes a step **206** of connecting the first low side **110** and the second low side **114** to a common ground **116.**

The method **200** includes a step **208** of connecting the first high side **108** to the load **102** via a first switch **118** and operating the apparatus **100** in a high voltage operation mode in which the AC power supply **104** is provided to the load **102.** The method **200** also includes a step **210** of connecting the second high side **112** to the load **102** via a second switch **120** and operating the apparatus **100** in a low voltage operation mode in which the DC power supply **106** is provided to the load **102.** The method **200** further includes a step (not shown) of sharing the same drive signal by both the switches **118, 120.**

According to an exemplary embodiment of the invention, the first switch **118** and/or the second switch **120** are one or more Field Effect Transistor (FET) switches. According to another exemplary embodiment of the invention, the first switch **118** is a Pulse Width Modulated (PWM) switch, such that a controller (not shown) of the apparatus **100** is configured to control a PWM duty cycle of the first switch **118.**

In the drawings and specification, there have been disclosed exemplary embodiments and examples of the invention and, although specific terms are employed, they are used in a generic and descriptive sense only and not for the purpose of limitation of the scope of the invention being set forth in the following claims.

### LIST OF ELEMENTS

- **100**: Apparatus
- **102**: Load/ Electric Motor
- **104**: AC Power Supply
- **106**: DC Power Supply/ Battery
- **108**: First High Side
- **110**: First Low Side
- **112**: Second High Side
- **114**: Second Low Side
- **116**: Common Ground
- **118**: First Switch
- **120**: Second Switch
- **200**: Method
- **202**: Step
- **204**: Step
- **206**: Step
- **208**: Step
- **210**: Step

## Claims

1. An apparatus **(100)** having a load **(102),** the apparatus **(100)** comprising:
an AC power supply **(104)** having a first high side **(108)** and a first low side **(110);**
a DC power supply **(106)** having a second high side **(112)** and a second low side **(114);**
a common ground **(116)** connecting the first low side **(110)** and the second low side **(114);**
**characterized in that:**
a first switch **(118)** configured to connect the first high side **(108)** of the AC power supply **(104)** to the load **(102);** and
a second switch **(120)** configured to connect the second high side **(112)** of the DC power supply **(106)** to the load **(102);**
wherein the first switch **(118)** is configured to operate the apparatus **(100)** in a high voltage operation mode in which the AC power supply **(104)** is provided to the load **(102);** and
the second switch **(120)** is configured to operate the apparatus **(100)** in a low voltage operation mode in which the DC power supply **(106)** is provided to the load **(102).**

2. The apparatus **(100)** according to claim **1,** wherein the first switch **(118)** and/or the second switch **(120)** are one or more Field Effect Transistor (FET) switches.

3. The apparatus **(100)** according to any one of the preceding claims,
wherein both the switches **(118, 120)** share the same drive signal.

4. The apparatus **(100)** according to any one of the preceding claims,
wherein the first switch **(118)** is a Pulse Width Modulated (PWM) switch.

5. The apparatus **(100)** according to claim **4,** wherein a controller is configured to control a PWM duty cycle of the first switch **(118).**

6. The apparatus **(100)** according to claim **1,** wherein the DC power supply **(106)** is a battery **(106).**

7. The apparatus **(100)** according to claim **1,** wherein the AC power supply **(104)** has a normal output voltage of **325** volts.

8. The apparatus **(100)** according to claim **6,** wherein the battery has a normal output voltage of **20** volts.

9. The apparatus **(100)** according to any one of the preceding claims,
wherein the apparatus **(100)** is one of the group comprising an electric pump, an electric cutting tool, and an electric mower.

10. The apparatus **(100)** according to any one of the preceding claims,
wherein the load **(102)** is an electric motor **(102).**

11. A method **(200)** of operating an apparatus **(100)** having a load **(102),** the method **(200)** comprising:
providing an AC power supply **(104)** having a first high side **(108)** and a first low side **(110);**
providing a DC power supply **(106)** having a second high side **(112)** and a second low side **(114);**
connecting the first low side **(110)** and the second low side **(114)** to a common ground **(116);**
**characterized in that:**
connecting the first high side **(108)** to the load **(102)** via a first switch **(118)** and operating the apparatus **(100)** in a high voltage operation mode in which the AC power supply **(104)** is provided to the load **(102);** and
connecting the second high side **(112)** to the load **(102)** via a second switch **(120)** and operating the apparatus **(100)** in a low voltage operation mode in which the DC power supply **(106)** is provided to the load **(102).**

12. The method **(200)** according to claim **11,** wherein the first switch **(118)** and/or the second switch **(120)** are one or more Field Effect Transistor (FET) switches.

13. The method **(200)** according to any one of the claims 11-12, wherein both the switches **(118, 120)** share the same drive signal.

14. The apparatus **(100)** according to any one of the claims 11-13, wherein the apparatus **(100)** is one of the group comprising an electric pump, an electric cutting tool, and an electric mower.

15. The method **(200)** according to any one of the claims 11-14, wherein the DC power supply **(106)** is a battery **(106).**

## Amended claims

### Amended claims in accordance with Rule 137(2) EPC.

1. An apparatus **(100),** the apparatus **(100)** being an electric power tool comprising a load **(102),** the apparatus **(100)** comprising:
an AC power supply interface for receiving power from an AC power supply **(104)** having a live terminal **(108)** and a neutral terminal **(110);**
a DC power supply interface for receiving power from a DC power supply **(106)** having a second high side **(112)** and a second low side **(114),** wherein a common ground **(116)** connects the neutral terminal **(110)** and the second low side **(114);**
**characterized in that:**
a first switch **(118)** integrated within the apparatus **(100)** and configured to connect the live terminal **(108)** of the AC power supply **(104)** to the load **(102)** to operate the apparatus **(100)** in a high voltage operation mode; and
a second switch **(120)** integrated within the apparatus **(100)** and configured to connect the second high side **(112)** of the DC power supply **(106)** to the load **(102)** to operate the apparatus **(100)** in a low voltage operation mode.

2. The apparatus **(100)** according to claim **1,** wherein the first switch **(118)** and/or the second switch **(120)** are one or more Field Effect Transistor (FET) switches.

3. The apparatus **(100)** according to any one of the preceding claims,
wherein both the switches **(118, 120)** share the same drive signal.

4. The apparatus **(100)** according to any one of the preceding claims,
wherein the first switch **(118)** is a Pulse Width Modulated (PWM) switch.

5. The apparatus **(100)** according to claim **4,** wherein a controller is configured to control a PWM duty cycle of the first switch **(118).**

6. The apparatus (100) according to claim **1,** wherein the DC power supply **(106)** is a battery **(106).**

7. The apparatus **(100)** according to claim **1,** wherein the AC power supply **(104)** has a normal output voltage of **325** volts.

8. The apparatus **(100)** according to claim **6,** wherein the battery has a normal output voltage of **20** volts.

9. The apparatus **(100)** according to any one of the preceding claims,
wherein the apparatus **(100)** is one of the group comprising an electric pump, an electric cutting tool, and an electric mower.

10. The apparatus **(100)** according to any one of the preceding claims,
wherein the load **(102)** is an electric motor **(102).**

11. A method **(200)** of operating an apparatus **(100),** the apparatus **(100)** being an electric power tool comprising a load **(102),** the method **(200)** comprising:
providing an AC power supply interface for receiving power from an AC power supply **(104)** having a live terminal **(108)** and a neutral terminal **(110);**
providing a DC power supply interface for receiving power from a DC power supply **(106)** having a second high side **(112)** and a second low side **(114);**
connecting the neutral terminal **(110)** and the second low side **(114)** to a common ground **(116);**
**characterized in that:**
the method comprises selectively operating the apparatus **(100)** in one of a high voltage operation mode and a low voltage operation mode, wherein operating in the high voltage operation mode comprises connecting the live terminal **(108)** of the AC power supply **(104)** to the load **(102)** via a first switch **(118)** integrated within the apparatus **(100);** and
operating in the low voltage operation mode comprises connecting the second high side **(112)** of the DC power supply **(106)** to the load **(102)** via a second switch **(120)** integrated within the apparatus **(100).**

12. The method **(200)** according to claim **11,** wherein the first switch **(118)** and/or the second switch **(120)** are one or more Field Effect Transistor (FET) switches.

13. The method **(200)** according to any one of the claims 11-12, wherein both the switches **(118, 120)** share the same drive signal.

14. The apparatus **(100)** according to any one of the claims 11-13, wherein the apparatus **(100)** is one of the group comprising an electric pump, an electric cutting tool, and an electric mower.

15. The method **(200)** according to any one of the claims 11-14, wherein the DC power supply **(106)** is a battery **(106).**
